# EUROPEAN PATENT SPECIFICATION

(11) **EP 1 474 888 B1**
(45) Date of publication and mention of the grant of the patent: **19.12.2007**
(21) Application number: 03701670.6
(22) Date of filing: 10.02.2003
(51) Int. Cl.: H04L 1/08, H04L 1/00

(54) **RETRANSMISSION OF A BURST COPY IN A BROADBAND DIGITAL NETWORK**
NEUÜBERTRAGUNG EINER BURST-KOPIE IN EINEM BREITBAND-DIGITALNETZWERK
RETRANSMISSION D'UNE COPIE DE RAFALE DANS UN RESEAU NUMERIQUE A LARGE BANDE

(30) Priority: 14.02.2002 GB 0203539
(43) Date of publication of application: 10.11.2004
(73) Proprietor: Nokia Corporation, 02150 Espoo (FI)
(72) Inventor: PEKONEN, Harri, FIN-21260 Raisio (FI); SAVOLAINEN, Mikko, FIN-32410 Niinijoki (FI); AURANEN, Tommi, FIN-20520 Turku (FI); LAIHO, Kimmo, FIN-20810 Turku (FI)
(74) Representative: Piotrowicz, Pawel Jan Andrzej
(86) International application number: PCT/IB2003/000437
(87) International publication number: WO 2003/069833

(56) References cited:
- WO-A2-01/06694
- WO-A2-99/14885
- US-A1- 2001 053 142

## Description

### Field of the invention

The present invention relates to broadband digital transmission networks, particularly although not exclusively, Digital Video Broadcast Networks.

### Background art

Digital broadband transmission networks are known. An example of such a network enjoying popularity in Europe and elsewhere world-wide is Digital Video Broadcast (DVB) which, in addition to the delivery of televisual content, is also capable of delivering data. Another example of a broadband digital transmission network is that defined by the Advanced Television Systems Committee (ATSC). Both ATSC and DVB utilise a containerisation technique in which content for transmission is placed into MPEG-2 packets which act as data containers. Thus, the containers can be utilised to transport any suitably digitised data including, but not limited to High Definition TV, multiple channel Standard definition TV (PAL / NTSC or SECAM) and, of course, broadband multimedia data and interactive services.

In addition to the content, the transmissions of a typical broadband digital transmission also contain metadata describing the content being presently delivered together with content intended to be transmitted in the near future. The metadata that describes the said content is referred to as Service Information (SI). In the DVB systems, the DVB Service Information protocol as specified in the DVB Service Information specification (EN 300 468) and presently available for download from www.dvb.org can be used for transmitting this service information; however, the concept of service information is not limited to using the said DVB protocol. The service information is typically used in a receiver for digital broadband transmission for providing electronic programme guides (EPG) to the user on her display. Depending on the capabilities of a receiver, the user may be able to select programming for viewing, set reminders, and browse by genre, time or channel. In view of the demands placed upon a receiver as exemplified by the needs set out above, the power requirements of a receiver can be quite onerous, which is particularly the case for a mobile terminal equipped to receive digital broadband transmissions.

US-A-2001053142 describes transmitting apparatus performing transmission processing on a general timeslot, while transmitting sub-data using a sub-timeslot for improving communication quality. When a receiving process fails on the general timeslot, the receiving apparatus receives the sub-timeslot, combines a received result on the sub-timeslot with the received result on the general timeslot to re-decode and so reduce reception errors.

WO-A-9914885 describes a TDMA radiotelephone system in which a base station transmits a slot and a repeat of the slot to a mobile station. The mobile station selectively receives the slots, detects soft information from each of the slots, and provides a combination of the soft information to a channel decoder.

### Summary of the invention

Thus, according to a first aspect of the invention, there is provided a method of generating a transport stream according to claim 1. The method may comprise receiving content in the form of stream, reformatting said content as a first series of bursts discontinuous in time and generating a further series of bursts for inclusion in a transport stream with said first series of bursts, wherein said further series of bursts comprises copies of at least some of said first series of bursts.

Preferably, a set of Quality of Service (QoS) parameters are selected to match the requirements of a terminal population which may then be used to determine the periodicity and number of copies of a first burst. Thus where the terminal population is made up of terminals having a relatively large memory, then repeat bursts may be spread over a longer time period than for terminal populations having a relatively smaller memory. In this way, the sensitivity of the terminal to long period errors is reduced. In those terminal populations where the internal power source has a relatively limited capacity, the QoS parameters may be adjusted so that repeat bursts immediately follow the original burst, thereby maximising the time for which the receiver may be switched off. It will be further apparent that the QoS parameters may be varied even during a transmission so as to provide content in a form suitable for different populations of terminals. It will be appreciated that the content may be delivered in both continuous and discontinuous streams. The invention contributes to the delivery of high quality, high bandwidth content to users in any one of three transmission modes namely broadcast (one to all), multicast (one to many) or unicast, (one to one). In addition, the invention seeks to overcome the inherent disadvantage in the delivery of such content over simplex wireless networks namely the absence of a return channel. In any event, even were such a return channel available, perhaps via a different transmission network or medium, data recovery based on requests carried over such a return channel could be very inefficient due to the potentially huge number of users.

The method may comprise receiving content in the form of a first series of bursts discontinuous in time and generating a further series of bursts for inclusion in a transport stream with said first series of bursts, wherein said further series of bursts comprises copies of at least some of said first series of bursts.

Preferably, the content is delivered in a burst format to the head end. Advantageously, the content provider or other another entity having responsibility for the Quality of Service will define a set of QoS parameters for the content. The head end may then use the QoS parameters in the step of generating said further set of bursts.

Advantageously, the method may be applied to each transport stream delivered to a head end for transmission by the network. Thus, rather than the network transmitting content in a plurality of continuous streaming channels, the content may be transmitted in a burst mode. Consequently, a receiver in the terminal need only be active during those bursts relevant to the transport stream being received. The periodicity and number of repeats or copies of the series of discrete bursts may be determined by reference to a set of QoS parameters which may be defined by the content provider.

According to another aspect of the invention, there is provided a method of compensating for errors in a time division multiplex transport stream received in a digital broadband transmission, as specified in claim 18.

Advantageously, the provision of a further identical burst improves the QoS as a terminal operating in accordance with the method is able to receive the same content a number of times and thus, where bad packets are received, the terminal is able to replace such failed portions of a burst from packets received subsequently containing the same content. It will also be appreciated that where a burst is formed from multiplicands of MPE packets, a terminal can identify an MPE packet from its MAC address. The terminal can also calculate CRC/checksum of individual MPE packets. Additionally, because the each time sliced portion of content is available from a number of bursts, a terminal can, on initially receiving a transport stream, receive a first burst, which can be an original, or a copy of said original bursts and by so doing the terminal can reduce service start-up time.

According to a yet further aspect of the present invention, there is provided a client for receiving broadband digital transmissions, as specified in claim 23.

Such a terminal is particularly suited to receiving transmissions from a wireless network in which there is no return channel such as an IP datacast network. Such a network includes digital broadband transmission networks such utilising MPEG-2 multi-protocol encapsulation, for example DVB and ATSC networks. By implementing the invention at as low a level as possible in the network side multiplex and receiver demultiplex, processing demands on the receiver controller may be minimised.

### Brief Description of the Drawings

Embodiments of the present invention will now be described by way of example with reference to the accompanying drawings in which:
Figure 1 is a block diagram of a head-end and mobile terminal in accordance with an aspect of the present invention;
Figure 2 is a graph illustrating a continuous stream of content useful in understanding an embodiment of invention of Figure 1;
Figures 3a, 3b and 3c are all graphical examples of a transport stream in accordance with an embodiment of the invention;
Figure 4 is a schematic view illustrating the operation of an embodiment of present invention;
Figure 5 is graph illustrating a portion of a transport stream in accordance with a further embodiment of the invention;
Figure 6 is a graph illustrating a portion of a transport stream in accordance with a still further embodiment of the invention; and
Figure 7 is a flowchart illustrative of the operation of a receiver in accordance with an embodiment of the invention.

### Best modes for carrying out the invention

In the following, although reference is made to a terrestrial digital video broadcasting network (DVB-T), it will be clearly understood that the invention is applicable to any such digital broadband data transmission network and is not therefore intended to be limited by references to DVB-T. Similarly, references to System Information (SI) and Multi-Protocol Encapsulation (MPE) are also not intended to be limiting. Furthermore, the term transmission may be understood in the following to indicate a broadcast (one to all), multicast (one to many) or unicast (one to one), as required. In addition, the terms client and terminal are intended to used interchangeably.

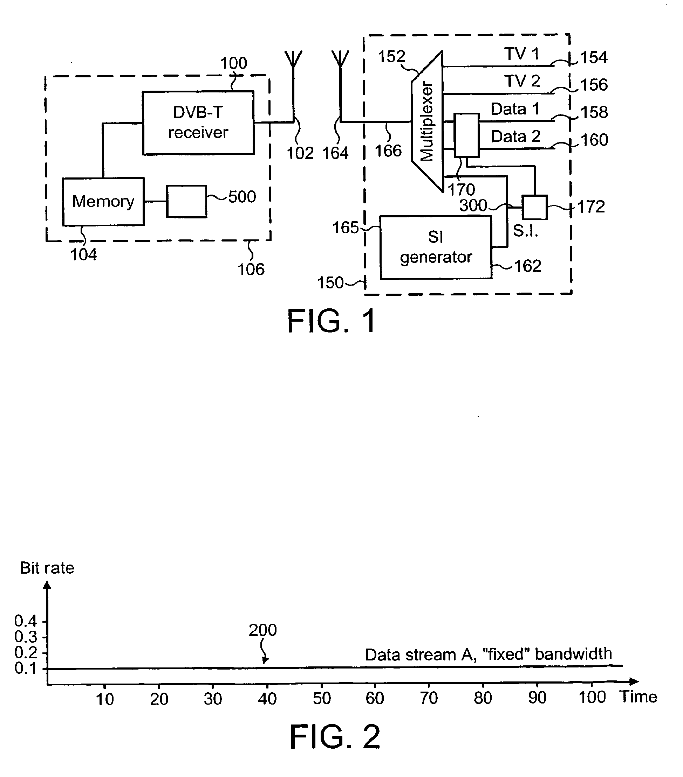

Referring to Figure 1, there is shown is a block diagram of a broadband transmission network in which a terrestrial digital video broadcasting (DVB-T) head-end 150 transmits a DVB-T signal to a client 106 such as a mobile terminal including a receiver 100 capable of receiving the DVB-T signal.

At the head-end 150, a number of television channels 154 and 156 are multiplexed together with a number of data channels 158 and 160 by a multiplexer 152. In addition to this, service information (SI) 162, which contains details of each of the other multiplexed channels, is also input to the multiplexer 152, provided by a SI generator 165. The multiplexer creates a single, multiplexed, signal 166 which contains all of the separate channels 154, 156, 158 and 160, along with the Sl 162. The multiplexed signal 166 is transmitted via an antenna 164, across a single physical transmission channel, and received at an antenna 102 of a client 106 in the form of a mobile terminal. In the case of DVB-T, the transmission channel is a terrestrial transmission channel. However, the transmission channel could, alternatively, be a satellite, microwave, cable or optical channel.

The signals received by the antenna 102 are input to a DVB-T receiver 100 which enables the user to select a desired channel. Received data may also be stored in a memory 104.

Whilst the client 106 is switched on, the receiver 100 is also powered up and receiving the signal in the form of the physical transmission channel. The receiver decodes SI information which provides details of the content and location of each of the channels within the received multiplexed signal as will be described in more detail below. The SI information also contains schedule details for each of the multiplexed channels. The schedule details allow a user to watch or record a specific programme of interest. For example, if the client 106 in the form of a set-top-box is connected to a personal computer (not shown), it is possible to receive data transmitted over the DVB-T network. In this way, the transmission of large data files can be transmitted, to a large audience, using the high data rates provided by DVB-T transmission. If a data file is due to be transmitted at a certain time on a certain channel, the SI information will contain this information which can be used by the client 106 to ensure that receiver 100 receives the required data.

Sl information may change frequently, to reflect not only changes in program scheduling, but also to reflect re-allocation of frequencies and channels etc by the broadcaster. For example, it is possible for a channel to be transmitted on a different frequency to that scheduled originally. Since the Sl contains details of the frequencies (or changes to the frequencies), the receiver 100 should always be able to receive the desired content

Turning in more detail to the operation of the head-end 150 and client 106, Figure 2, is in the form of a graph illustrating a bit rate of a continuous service 200 for inclusion in the multiplex signal transmitted by the transmitter 164. It will be noted that the service 200 is a continuous stream of data or content. The service 200 is delivered to a processor 170 within the head end 150. In addition to an input to which the data stream is delivered, the processor has an output to the multiplexer 152 and is further coupled to a Look-Up Table (LUT) 172 holding Quality of Service (QoS) parameters. The quality of service parameters relates to the capabilities of terminals capable of receiving a transmission from the head end 150, and in particular their memory, sensitivity and power requirements. The LUT 172 contains a number of sets of parameters each suited to a particular terminal capability and also to particular streams. The LUT 172 is populated with data by an application under head-end 150 control and as such, the data may be varied to meet the operational requirements of the network, client and service.

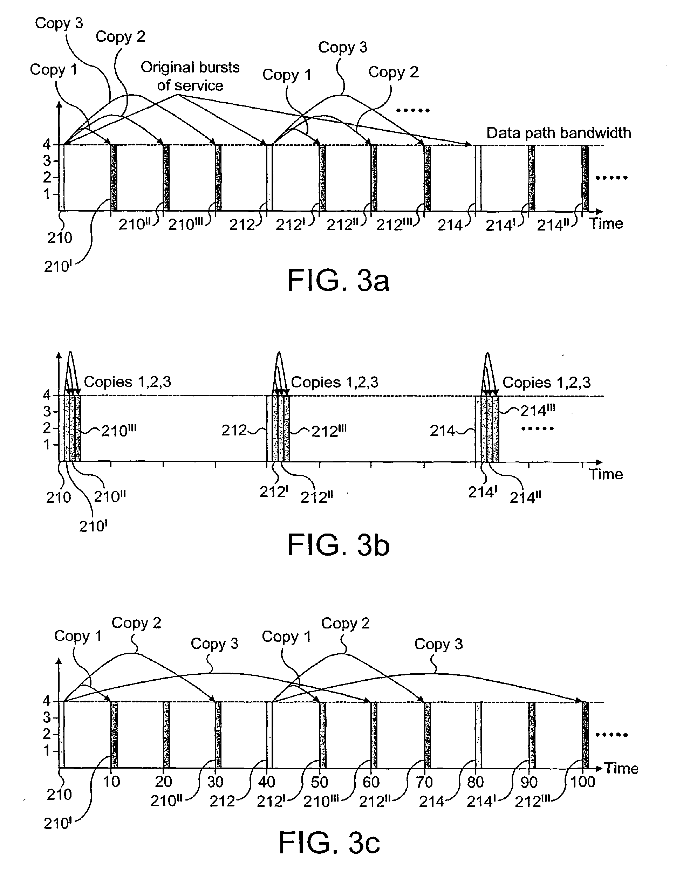

The processor 170 implements time slicing of the transport stream or service 200 to with the result the processor 170 delivers to the multiplexer 152 a set of discrete time sliced bursts 210,212,214 of content. In addition to the original time sliced bursts 210,212,214 of the service 200, the processor 170 ensures that each original time sliced burst 210,212,214 is repeated at least once. The determination of how often an original burst 210,212,214 is repeated and at what time interval and spacing, is determined by the processor 170 in consultation with the look up table 172. Figures 3a, 3b and 3c illustrate examples of the output from the processor 170 according to three different QoS parameters.

In Figure 3a, an original burst 210 is repeated three times 210', 210", 210"' at equispaced intervals between successive original bursts 210,212. In this manner, the QoS provides a compromise between receiver 100 off time and receiver memory 104 requirement.

In Figure 3b, an original burst 210 is immediately followed by three successive repeat bursts 210', 210", 210"' thereby increasing receiver 100 off time over the previous example but with a resultant decrease in the ability of the receiver 100 to correct errors.

In Figure 3c, each original burst 210 is re-sent to occur both before 210', 210" and after 210'" a further original burst 212 is sent. In this manner, the receiver 100 sensitivity to long period errors is improved at the expense of increasing memory 104 requirements of the client 106.

It will be appreciated by those skilled in the art that other time slicing approaches are possible in addition to the three examples set out herein. It will be further appreciated that the QoS may be varied during the streaming of data to the terminal perhaps on a cyclical basis.

In addition to delivering the time sliced bursts to the multiplexer 152 input, the processor 170 provides an indication of the timing of the original bursts, the number of repeats and their timing interval. This indication is provided as a data 300 for inclusion in the SI generated at the head end 150 and is therefore delivered to each terminal 106.

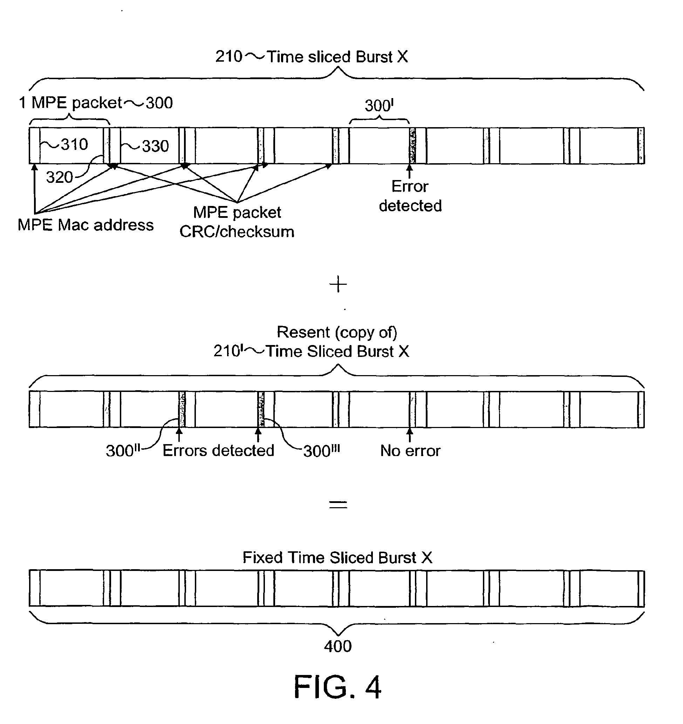

Turning now to the terminal 106 in more detail, as is well known, a user of the terminal 106 is able to select either directly and/or via an Electronic Program Guide or such, what datastream is to be rendered by the terminal 106. The generation of the programme guide may be carried out using information derived from the SI transmitted in the physical channel, thus the SI is always obtained by the terminal 106. Alternatively, the programme guide may be generated from another information channel delivered over IP. Where the user selects the aforementioned datastream for rendering on his terminal 106, the SI related to that stream is accessed by the terminal 106 and used to obtain the timing of the original bursts 210,212,214 and the repeated copies (see Figure 3) of those original bursts. Figure 4, illustrates an original time sliced burst 210 transmitted in accordance with one of the examples of Figure 3. It will be noted that the burst 210 is made up of a set of Multi-Protocol Encapsulated packets 300 each having a MAC address 310 and a packet Cyclic Redundancy Check 320 (CRC) and/or checksum 330.

The received burst 210 is filtered in the receiver 100 and saved into memory 104. Once in memory 104, a controller 500 carries out error checking based on the CRC 320 and/or checksum 330 information provided with each packet 300 in the burst 210. In the example shown in Figure 4, an error is detected in one of the packets 310'. The controller 500 then consults the SI information relevant to the timing of the original burst 210 and the repeats 210', 210", 210"' and is able to receive a repeat 210' of the original burst 210 as shown in Figure 4. Once again, the burst 210' is saved into memory 104 and a CRC/Checksum error analysis is carried out of each packet 300, in this case several errors 300", 300'" are detected but in different packets to the error detected in the original burst 210. The controller 500 is therefore able to replace the packet, identified by its neighbouring packets, which contained errors in the original burst 210 with a corresponding packet taken form the repeated burst 210', resulting in an error free time sliced burst 400 as shown in Figure 4. Clearly, if there had been a repeat of errors in the same packet on the repeat of the burst 210', the controller could have consulted the timing of a further copy burst 210" of the original burst 210 provided by the SI data. However, not all repeat bursts need necessarily to contain the same set of packets, it is merely sufficient that the repeat burst contains a packet or packets necessary to replace the erroneous packet in the original burst. Equally, the receiver 100 may terminate reception of a burst once a copy of the erroneous packet contained in the original burst has been received.

It will also be apparent that the receiver 100 is able to reduce service start up time for a stream delivered in a time-sliced manner as described above. Because each original burst 210,212,214 is repeated at least once, the opportunity to receive a burst is spread out over time, thus the receiver 100 does not have to wait the full time interval between successive original bursts.

As will be appreciated from the forgoing, the presence of interference in the transmission channel may have a deleterious effect on the integrity of data being carried on that channel, particularly where high bandwidth bursts of relatively short duration are utilised to carry the data. Again, as has previously been indicated, a receiver, of which there may be many, may not always be provided with a return channel by which the receiver can request retransmission of corrupted and/or missing packets and/or bursts.

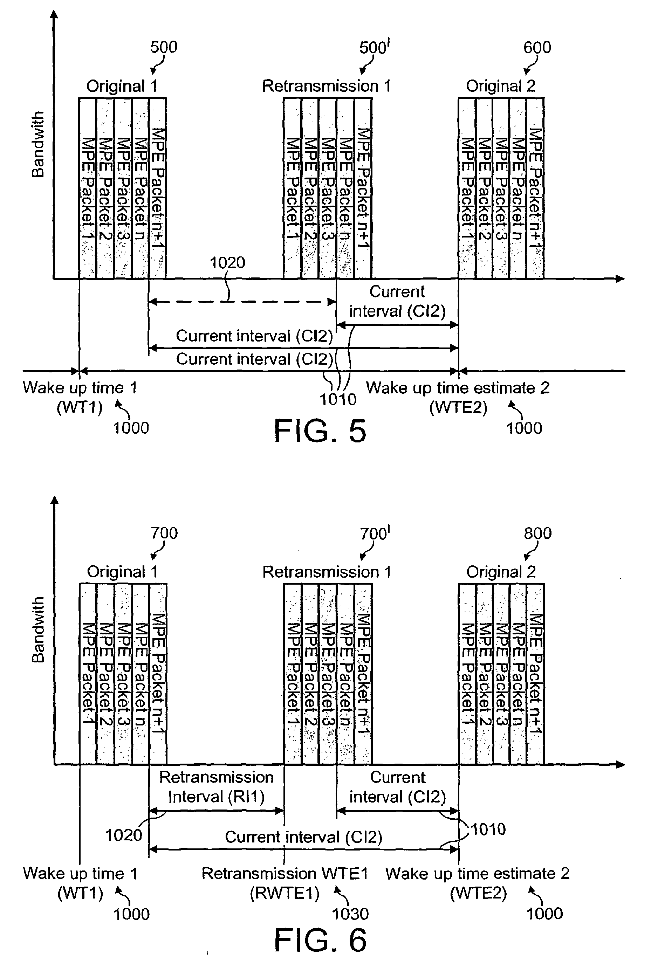

Figures 5 to 7 illustrate in the time domain, the transmission of bursts utilising the above described apparatus and in accordance with two further embodiments of the transmission approach set out above. In these embodiments, information pertaining to the timing of original bursts, their copies and timing intervals is not included in the Sl, rather it is placed in the packet frame information.

Thus, according to a further embodiment of a transmission method illustrated in Figure 5, there is shown a first original burst 500 made up of a plurality of packets. A further copy 500' or retransmission of that burst is shown at a later time which is followed, in time, by a second original burst 600 unrelated to the first.

At the head end 150, data is introduced to the frame information of those packets 500, 500', 600 comprising a burst. The data provides a current interval to the so-called 'Wakeup Time Estimate (WTE)' 1000 namely the time at which the transmission of the next, in this example, the second, original burst 600 commences. The current interval 1010 is calculated as the time period between a packet of the burst 500 in which the data is introduced, to the WTE 1000 of the next original burst 600. Thus, the receiver 100 of the terminal 106 is able to prepare for the arrival of an original burst 600 provided at least the immediately preceding original burst 500 or a copy 500' thereof is received.

In a variant of this embodiment, the client 106 is provided with an algorithm to allow the calculation of a retransmission interval 1020 namely the time period between a particular packet of a burst 500 from which the current interval 1010 data is extracted by the client 106 and the next burst 500' containing a copy of that packet. The algorithm may be pre-programmed in the terminal 106 and/or programmable in response to data delivered over the channel from the head end 150.

With reference to Figure 6, the head end 150 introduces data to the frame information of those packets comprising a burst 700, 700', 800. As described in relation to the preceding embodiment, the data provides a current interval 1010 to the so-called 'Wakeup Time Estimate (WTE)' 1000 namely the time at which the transmission of the next, in this example, the second, original burst 800 commences. In addition, the data further includes the interval to the start of the next retransmission namely the retransmission interval 1020 referred to in the variant of the preceding embodiment. In this embodiment, rather than derive the retransmission interval 1020, the client 106 is provided with the retransmission wakeup time estimate (RWTE) 1030 explicitly.

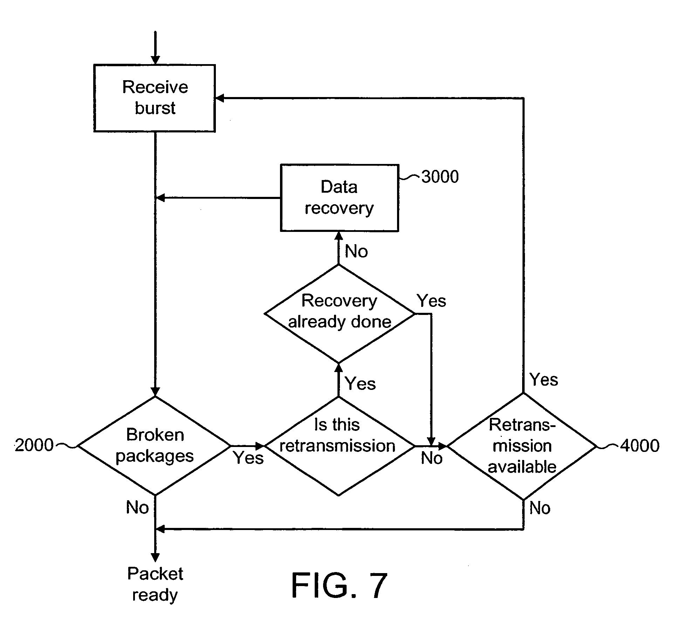

It will be recognised by those skilled in the art that in respect of either of the above described embodiments, there is no need for the client 106 to maintain an accurate real time clock based on Greenwich Mean Time or indeed, any other absolute time measurement. Figure 7 illustrates, in the form of a flowchart, the general steps taken by a terminal 106 in receiving bursts in accordance with either of the above two embodiments.

The client 106 is able to mark packets that have bit errors 2000. Such packets may be Transport Stream (TS), Multi-Protocol Encapsulated (MPE) or some other packet. If there are no errors detected during the retransmission of a burst that contained bit errors, the retransmitted burst can be used as is, that is it can be passed in its entirety to the client application. However, in the event there are some broken packets in the retransmitted burst the receiver attempts to reconstruct a new burst for delivery to the application by collecting good packets together from received bursts, in a Data recovery step 3000. If there remain corrupted packets following data recovery, further retransmissions may be obtained, if available 4000.

It will be appreciated by those skilled in the art that a receiver may be able to adapt to changes in a transmission scheme reflecting the above-described embodiments. For example, the scheme may be varied depending on the location, time or current content. For example, at the head end 150, different operation schemes are defined via an identification code given to each scheme. The identification code may then be included in the channel such that the receiver is able to adapt to the scheme represented by a particular code.

## Claims

1. A method of generating a transport stream (200) for transmission by a communication network, the method comprising generating for inclusion in said transport stream a first series of discrete bursts (210, 212, 214) of a first bandwidth, said bursts including content corresponding to content delivered in a second series of bursts of a second, narrower bandwidth wherein said second series of bursts comprises copies (210', 212', 214') of at least some of said bursts of said first series and **characterised in that** data (300) identifying the periodicity and/or number of copies of said bursts is delivered in a pre-selected transmission path.

2. A method according to claim 1, wherein generating a transport stream comprises receiving content in the form of stream and reformatting said content as the first series of bursts (210, 212, 214) discontinuous in time.

3. A method according to claim 1, wherein generating a transport stream comprises receiving content in the form of the first series of bursts (210, 212, 214) discontinuous in time.

4. A method as claimed in any preceding claim, wherein said communication network is a simplex network.

5. A method as claimed in any preceding claim, wherein said network is a wireless network.

6. A method as claimed in any preceding claim, wherein said transport stream (200) is carried in one of a satellite, terrestrial, microwave, cable or optical transmission channel.

7. A method as claimed in any preceding claim, wherein said further series of bursts (210', 212', 214') comprises at least some of said data content of said first series of bursts.

8. A method as claimed in any preceding claim, wherein said first and further series of bursts (210, 212, 214, 210', 212', 214') are included sequentially in said transport stream.

9. A method as claimed in any preceding claim, wherein the periodicity and/or number of copies of each of said bursts is predetermined.

10. A method as claimed in claim 9, wherein said periodicity and/or number of copies of each of said bursts is determined by reference to a set of Quality of Service parameters.

11. A method as claimed in claim 10, wherein the parameters state when the transport stream (200) should be received.

12. A method as claimed in any preceding claim, wherein said data is delivered as packet frame information of one or more packets contained in said burst.

13. A method as claimed in any preceding claim, wherein the data includes the time interval between an original burst and a copy thereof.

14. A method as claimed in any preceding claim, wherein the data includes the time interval between a burst containing a first set of packets and a further burst containing a second, different set of packets.

15. A method as claimed in any preceding claim, wherein the data includes the time interval between a burst containing a first set of packets and a further burst containing said first set of packets.

16. A method as claimed in any preceding claim, wherein the content is received in a stream which is continuous in time.

17. A head end apparatus (150) comprising means adapted to execute the method of any preceding claim.

18. A method of compensating for errors in a time division multiplex transport stream (200) received in a digital broadband transmission, the method comprising extracting a first burst (210) from said transport stream, extracting data (300) identifying the periodicity and/or number of copies of said first burst delivered in a pre-selected transmission path, identifying those packets contained in said burst having errors and where said errors are present extracting a further burst (210') from said transport stream and replacing bad packets in said first burst with corresponding packets from said further burst.

19. A method as claimed in claim 18, wherein where said corresponding packets in said further burst are identified as having errors, at least a part of a still further burst is extracted from said transport stream and those packets contained in said further burst having errors are identified such that said packets having errors in said first burst are replaced by corresponding packets in said still further bursts.

20. A method as claimed in claim 19, wherein at least a part of a still further burst comprises at least a copy of a single packet of said first burst for identification purposes.

21. A method as claimed in any one of claims 18 to 20, wherein said information is included in said transport stream.

22. A method as claimed in any one of claims 18 to 21, wherein a receiver for receiving said transport stream is disabled between said bursts.

23. A client (106) for receiving broadband digital transmissions, said client including a receiver (200), a filter, a controller and a memory (104), wherein said filter is operable to extract a burst from a first series of bursts (210, 212, 214) in a transport stream, the controller being operable to extract data (300) identifying the periodicity and/or number of copies of said first burst delivered in a pre-selected transmission path, to identify packets contained in said burst and to further identify those packets having errors and to store said packets in said memory such that where an error is present in a packet, said filter is operable to extract at least a portion of a further burst from said transport stream, the controller being operable to identify packets contained in said further burst and to identify those packets contained in said further burst having errors such that a said packet contained in said memory having an error is replaced by a corresponding packets identified in said further burst, provided said corresponding packet has not been identified as having an error.

24. A client as claimed in claim 23, wherein said receiver is inactive between bursts.

25. A client as claimed in claim 23 or claim 24, wherein the controller is an ASIC.

26. A network node for generating a transport stream (200) for transmission by a communications network, the network node configured to generate for inclusion in said transport stream a first series of discrete bursts (210, 212, 214) of a first bandwidth, said bursts including content corresponding to content delivered in a stream of a second, narrower bandwidth wherein said transport stream further includes copies (210', 212', 214') of at least some of said bursts and **characterised in that** data (300) identifying the periodicity and/or number of copies of said first burst is delivered in a pre-selected transmission path.

27. A network node according to claim 26, configured to receive content in the form of a stream and to reformat said content as the first series of bursts (210, 212, 214) discontinuous in time.

28. A network node according to claim 26, configured to receive content in the form of the first series of bursts (210, 212, 214) discontinuous in time stream.

## Patentansprüche

1. Verfahren zum Erzeugen eines Transportstroms (200) zur Übertragung durch ein Kommunikationsnetzwerk, wobei das Verfahren umfasst
Erzeugen zum Einschließen in den Transportstrom einer ersten Sequenz von diskreten Bursts (210, 212, 214) einer ersten Bandbreite, wobei die Bursts Inhalt enthalten, der einem in einer zweiten Sequenz von Bursts einer zweiten, engeren Bandbreite ausgelieferten Inhalt entspricht, wobei die zweite Sequenz von Bursts Kopien (210', 212', 214') von wenigstens einigen der Bursts der ersten Sequenz umfasst, und
**dadurch gekennzeichnet, dass** Daten (300), welche die Periodizität und/oder Anzahl von Kopien der Bursts kennzeichnen, in einem vorausgewählten Übertragungsweg ausgeliefert werden.

2. Verfahren gemäß Anspruch 1, wobei Erzeugen eines Transportstroms umfasst
Empfangen von Inhalt in der Form eines Stroms und Umformatieren des Inhalts als die erste Sequenz von Bursts (210, 212, 214) diskontinuierlich in der Zeit.

3. Verfahren gemäß Anspruch 1, wobei Erzeugen eines Transportstroms umfasst
Empfangen von Inhalt in der Form der ersten Sequenz von Bursts (210, 212, 214) diskontinuierlich in der Zeit.

4. Verfahren gemäß einem der vorhergehenden Ansprüche, wobei das Kommunikationsnetzwerk ein Simplex-Netzwerk ist.

5. Verfahren gemäß einem der vorhergehenden Ansprüche, wobei das Netzwerk ein drahtloses Netzwerk ist.

6. Verfahren gemäß einem der vorhergehenden Ansprüche, wobei der Transportstrom (200) übertragen wird in einem von einem Satellitenkanal, terrestrischen Kanal, Mikrowellenkanal, Kabelkanal oder optischen Übertragungskanal.

7. Verfahren gemäß einem der vorhergehenden Ansprüche, wobei die Sequenz von Bursts (210', 212', 214') wenigstens etwas des Dateninhalts der ersten Sequenz von Bursts umfasst.

8. Verfahren gemäß einem der vorhergehenden Ansprüche, wobei die erste und die weiteren Sequenz von Bursts (210, 212, 214, 210', 212', 214') nacheinander in dem Transportstrom enthalten sind.

9. Verfahren gemäß einem der vorhergehenden Ansprüche, wobei die Periodizität und/oder Anzahl von Kopien von jedem der Bursts vorherbestimmt ist.

10. Verfahren gemäß Anspruch 9, wobei die Periodizität und/oder Anzahl von Kopien von jedem der Bursts durch Bezug auf einen Satz von Dienstqualitätsparametern bestimmt ist.

11. Verfahren gemäß Anspruch 10, wobei die Parameter angeben, wann der Transportstrom (200) empfangen werden sollte.

12. Verfahren gemäß einem der vorhergehenden Ansprüche, wobei die Daten als Paketrahmeninformationen von einem oder mehreren Paketen, die in den Burst enthalten sind, ausgeliefert werden.

13. Verfahren gemäß einem der vorhergehenden Ansprüche, wobei die Daten das Zeitintervall zwischen einem ursprünglichen Burst und einer Kopie davon enthalten.

14. Verfahren gemäß einem der vorhergehenden Ansprüche, wobei die Daten das Zeitintervall zwischen einem Burst, der einem ersten Satz von Paketen enthält, und einem weiteren Burst, der einen zweiten, anderen Satz von Paketen enthält, enthalten.

15. Verfahren gemäß einem der vorhergehenden Ansprüche, wobei die Daten das Zeitintervall zwischen einem Burst, der einen ersten Satz von Paketen enthält, und einem weiteren Burst, der den ersten Satz von Paketen enthält, enthalten.

16. Verfahren gemäß einem der vorhergehenden Ansprüche, wobei der Inhalt in einem Strom empfangen wird, der kontinuierlich in der Zeit ist.

17. Kopfstellenvorrichtung (150) umfassend Mittel, die angepasst sind, dass Verfahren eines der vorhergehenden Ansprüche auszuführen.

18. Verfahren zum Kompensieren von Fehlern in einem zeitgeteilten Multiplextransportstrom (200), der in einer digitalen Rundfunkübertragung empfangen wurde, wobei das Verfahren umfasst Entnehmen eines ersten Bursts (210) aus dem Transportstrom, Entnehmen von Daten (300), welche die Periodizität und/oder Anzahl von Kopien des ersten Bursts, der in einem vorausgewählten Übertragungspfad ausgeliefert wurde, kennzeichnen, Erkennen derjenigen in dem Burst enthaltenen Pakete, die fehlerhaft sind, und, wo die Fehler anwesend sind, Entnehmen eines weiteren Bursts (210') aus dem Transportstrom und Ersetzen fehlerhafter Pakete in dem ersten Burst mit entsprechenden Paketen aus dem weiteren Burst.

19. Verfahren gemäß Anspruch 18, wobei, wenn die entsprechenden Pakete in dem weiteren Burst als fehlerhaft erkannt werden, wenigstens ein Teil eines noch weiteren Bursts aus dem Transportstrom entnommen wird und diejenigen fehlerhaften Pakete, die in dem weiteren Burst enthalten sind, erkannt werden, sodass die fehlerhaften Pakete in dem ersten Burst ersetzt werden durch entsprechende Pakete in den noch weiteren Bursts.

20. Verfahren gemäß Anspruch 19, wobei wenigstens ein Teil eines noch weiteren Bursts wenigstens eine Kopie eines einzelnen Pakets des ersten Bursts zu Erkennungszwecken umfasst.

21. Verfahren gemäß einem der Ansprüche 18 bis 20, wobei die Informationen in dem Transportstrom enthalten sind.

22. Verfahren gemäß einem der Ansprüche 18 bis 21, wobei ein Empfänger zum Empfangen des Transportstroms zwischen den Bursts abgeschaltet wird.

23. Client (106) zum Empfangen von Rundfunkdigitalübertragungen, wobei der Client enthält einen Empfänger (200), einen Filter, eine Steuerung und einen Speicher (104), wobei der Filter betreibbar ist, einen Burst aus einer ersten Sequenz von Bursts (210, 212, 214) in einem Transportstrom zu entnehmen, wobei die Steuerung betreibbar ist, Daten (300), welche die Periodizität und/oder Anzahl von Kopien des ersten, in einem vorausgewählten Übertragungspfad ausgelieferten Bursts kennzeichnen, zu entnehmen, um Pakete, die in dem Burst enthalten sind, zu erkennen, und um weiter diejenigen Pakete, die fehlerhaft sind, zu erkennen, und um die Pakete in dem Speicher zu speichern, sodass, wo ein Fehler in einem Paket vorhanden ist, der Filter betreibbar ist, wenigstens einen Teil eines weiteren Bursts aus dem Transportstrom zu entnehmen, wobei die Steuerung betreibbar ist, Pakete, die in dem weiteren Burst enthalten sind, zu erkennen und um diejenigen, in dem weiteren Burst enthaltenen Pakete, die fehlerhaft sind, zu erkennen, sodass das in dem Speicher enthaltene Paket, das fehlerhaft ist, durch ein entsprechendes, in dem weiteren Burst erkannte Paket ersetzt wird, vorausgesetzt, dass das entsprechende Paket nicht als fehlerhaft erkannt worden ist.

24. Client gemäß Anspruch 23, wobei der Empfänger zwischen Bursts inaktiv ist.

25. Client gemäß Anspruch 23 oder 24, wobei die Steuerung ein ASIC ist.

26. Netzwerkknoten zum Erzeugen eines Transportstroms (200) zur Übertragung durch ein Kommunikationsnetzwerk, wobei der Netzwerkknoten konfiguriert ist, zum Einschließen in den Transportstrom eine erste Sequenz von diskreten Bursts (210, 212, 214) einer ersten Bandbreite zu erzeugen, wobei die Bursts Inhalt enthalten, der dem in einem Strom einer zweiten, schmaleren Bandbreite ausgelieferten Inhalt entspricht, wobei der Transportstrom weitere Kopien (210', 212', 214') von wenigstens einigen der Bursts enthält, und
**dadurch gekennzeichnet, dass** Daten (300), welche die Periodizität und/oder Anzahl von Kopien der ersten Bursts kennzeichnen, in einem vorausgewählten Übertragungsweg ausgeliefert werden.

27. Netzwerkknoten gemäß Anspruch 26, der konfiguriert ist, Inhalt in der Form eines Stroms zu empfangen und den Inhalt als die erste Sequenz von Bursts (210, 212, 214) diskontinuierlich in der Zeit umzuformatieren.

28. Netzwerkknoten gemäß Anspruch 26, der konfiguriert ist, Inhalt in der Form der ersten Sequenz von Bursts (210, 212, 214) diskontinuierlich in der Zeit als Strom zu empfangen.

## Revendications

1. Procédé pour générer un flux de transport (200) pour la transmission par un réseau de communication, le procédé consistant à générer pour l'inclusion dans ledit flux de transport une première série de rafales discrètes (210, 212, 214) d'une première largeur de bande, lesdites rafales comprenant un contenu correspondant à un contenu délivré dans une deuxième série de rafales d'une deuxième largeur de bande plus étroite, où ladite deuxième série de rafales comprend des copies (210', 212', 214') d'au moins certaines desdites rafales de ladite première série, **caractérisé en** de que des données (300) identifiant la périodicité et/ou le nombre de copies desdites rafales sont délivrées dans une voie de transmission présélectionnée.

2. Procédé selon la revendication 1, dans lequel la génération d'un flux de transport consiste à recevoir un contenu sous la forme de flux et reformater ledit contenu comme la première série de rafales (210, 212, 214) discontinues dans le temps.

3. Procédé selon la revendication 1, dans lequel la génération d'un flux de transport consiste à recevoir un contenu sous la forme de la première série de rafales (210, 212, 214) discontinues dans le temps.

4. Procédé selon l'une quelconque des revendications précédentes, dans lequel ledit réseau de communication est un réseau simplex.

5. Procédé selon l'une quelconque des revendications précédentes, dans lequel ledit réseau est un réseau sans fil.

6. Procédé selon l'une quelconque des revendications précédentes, dans lequel ledit flux de transport (200) est porté dans l'une parmi une voie de transmission par satellite, terrestre, hyperfréquence, câble ou optique.

7. Procédé selon l'une quelconque des revendications précédentes, dans lequel où ladite autre série de rafales (210', 212', 214') comprend au moins certains des contenus de données de ladite première série de rafales.

8. Procédé selon l'une quelconque des revendications précédentes, dans lequel lesdites première et autre séries de rafales (210, 212, 214, 210', 212', 214') sont inclues séquentiellement dans ledit flux de transport.

9. Procédé selon l'une quelconque des revendications précédentes, dans lequel la périodicité et/ou le nombre de copies de chacune desdites rafales est prédéterminé.

10. Procédé selon la revendication 9, dans lequel ladite périodicité et/ou le nombre de copies de chacune desdites rafales est déterminé en référence à un ensemble de paramètres de qualité de service.

11. Procédé selon la revendication 10, dans lequel les paramètres établissent quand le flux de transport (200) devrait être reçu.

12. Procédé selon l'une quelconque des revendications précédentes, dans lequel lesdites données sont délivrées comme des informations de trames par paquets d'un ou plusieurs paquets contenus dans ladite rafale.

13. Procédé selon l'une quelconque des revendications précédentes, dans lequel les données comprennent l'intervalle de temps entre une rafale d'origine et une copie de celle-ci.

14. Procédé selon l'une quelconque des revendications précédentes, dans lequel les données comprennent l'intervalle de temps entre une rafale contenant un premier ensemble de paquets et une autre rafale contenant un deuxième ensemble différent de paquets.

15. Procédé selon l'une quelconque des revendications précédentes, dans lequel les données comprennent l'intervalle de temps entre une rafale contenant un premier ensemble de paquets et une autre rafale contenant ledit premier ensemble de paquets.

16. Procédé selon l'une quelconque des revendications précédentes, dans lequel le contenu est reçu dans un flux qui est continu dans le temps.

17. Dispositif de tête de réseau (150) comprenant des moyens adaptés pour exécuter le procédé selon l'une quelconque des revendications précédentes.

18. Procédé pour compenser des erreurs dans un flux de transport multiplex à répartition dans le temps (200) reçu dans une transmission numérique à large bande, le procédé consistant à extraire une première rafale (210) dudit flux de transport, extraire des données (300) identifiant la périodicité et/ou le nombre de copies de ladite première rafale délivrée dans une voie de transmission présélectionnée, identifier les paquets contenus dans ladite rafale comportant des erreurs et, lorsque lesdites erreurs sont présentes, extraire une autre rafale (210') dudit flux de transport et remplacer de mauvais paquets dans ladite première rafale par des paquets correspondants provenant de ladite autre rafale.

19. Procédé selon la revendication 18, dans lequel, lorsque lesdits paquets correspondants provenant de ladite autre rafale sont identifiés comme comportant des erreurs, au moins une partie d'une autre rafale encore est extraite dudit flux de transport et les paquets contenus dans l'autre rafale comportant des erreurs sont identifiés de manière que lesdits paquets comportant des erreurs dans ladite première rafale soient remplacés par des paquets correspondants dans lesdites autres rafales encore.

20. Procédé selon la revendication 19, dans lequel au moins une partie d'une autre rafale encore comprend au moins une copie d'un unique paquet de ladite première rafale pour de besoins d'identification.

21. Procédé selon l'une quelconque des revendications 18 à 20, dans lequel lesdites informations sont comprises dans ledit flux de transport.

22. Procédé selon l'une quelconque des revendications 18 à 21, dans lequel un récepteur pour recevoir ledit flux de transport est invalidé entre lesdites rafales.

23. Dispositif client (106) pour recevoir des transmissions numériques à large bande, ledit dispositif client comprenant un récepteur (200), un filtre, un contrôleur et une mémoire (104), dans lequel ledit filtre peut fonctionner pour extraire une rafale à partir d'une première série de rafales (210, 212, 214) dans un flux de transport, le contrôleur pouvant fonctionner pour extraire des données (300) identifiant la périodicité et/ou le nombre de copies de ladite première rafale délivrée dans une voie de transmission présélectionnée, pour identifier des paquets contenus dans ladite rafale et pour identifier en outre les paquets comportant des erreurs et mémoriser lesdits paquets dans ladite mémoire de manière que, lorsque une erreur est présente dans un paquet, ledit filtre peut fonctionner pour extraire au moins une partie d'une autre rafale encore dudit flux de transport, le contrôleur pouvant fonctionner pour identifier des paquets contenus dans ladite autre rafale et pour identifier les paquets contenus dans ladite autre rafale comportant des erreurs, de manière qu'un dit paquet contenu dans ladite mémoire comportant une erreur soit remplacé par un paquet correspondant identifié dans ladite autre rafale, pourvu que ledit paquet correspondant n'ait pas été identifié comme comportant une erreur.

24. Dispositif client selon la revendication 23, dans lequel ledit récepteur est inactif entre des rafales.

25. Dispositif client selon la revendication 23 ou 24, dans lequel le contrôleur est un circuit intégré spécifique.

26. Noeud de réseau pour générer un flux de transport (200) pour la transmission par un réseau de communication, le procédé consistant à générer pour l'inclusion dans ledit flux de transport une première série de rafales discrètes (210, 212, 214) d'une première largeur de bande, lesdites rafales comprenant un contenu correspondant à un contenu délivré dans un flux d'une deuxième largeur de bande plus étroite, où ledit flux de transport comprend en outre des copies (210', 212', 214') d'au moins certaines desdites rafales et **caractérisé en** de que des données (300) identifiant la périodicité et/ou le nombre de copies de ladite première rafale sont délivrées dans une voie de transmission présélectionnée.

27. Noeud de réseau selon la revendication 26, configuré pour recevoir un contenu sous la forme d'un flux et reformater ledit contenu comme la première série de rafales (210, 212, 214) discontinues dans le temps.

28. Noeud de réseau selon la revendication 26, configuré pour recevoir un contenu sous la forme de la première série de rafales (210, 212, 214) discontinues dans le temps.
